(19) **Europäisches Patentamt**
**European Patent Office**
**Office européen des brevets**

(11) **EP 3 869 283 B1**

(12) **EUROPEAN PATENT SPECIFICATION**

(45) Date of publication and mention
of the grant of the patent:
**19.10.2022 Bulletin 2022/42**

(51) International Patent Classification (IPC):
**G05B 15/02** (2006.01)

(52) Cooperative Patent Classification (CPC):
**G05B 15/02;** G05B 2219/2614; G05B 2219/2642

(21) Application number: **20158839.9**

(22) Date of filing: **21.02.2020**

(54) **SYSTEM CONFIGURATION**

SYSTEMKONFIGURATION

CONFIGURATION DU SYSTÈME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.08.2021 Bulletin 2021/34**

(73) Proprietor: **Siemens Schweiz AG
8047 Zürich (CH)**

(72) Inventor: **Zimmermann, Martin
8909 Zwillikon (CH)**

(74) Representative: **Maier, Daniel Oliver
Siemens AG
Postfach 22 16 34
80506 München (DE)**

(56) References cited:
**WO-A1-2017/062846     WO-A2-2013/080082
US-A1- 2006 074 494     US-A1- 2009 066 473**

- **FAHEEM ZAFARI ET AL: "Micro-location for
Internet of Things equipped Smart Buildings",
ARXIV.ORG, CORNELL UNIVERSITY LIBRARY,
201 OLIN LIBRARY CORNELL UNIVERSITY
ITHACA, NY 14853, 7 January 2015 (2015-01-07),
XP080675948,**

## Description

Background

The present disclosure teaches how to configure a controller, a sensor, and/or an actuator in a building. More specifically, the present disclosure focuses on ultrawideband localisation of components in a commercial, residential, or industrial building.

Residential, commercial and/or industrial buildings commonly have a plurality of actuators such as valves and/or damper actuators to control heating, ventilation, and/or air conditioning (HVAC). These buildings can also include actuators to set the positions of blinds and other actuators can be intended to switch and dim lights.

In addition to these actuators, sensors such as light sensors, temperature sensors, sensors for measuring particulate matter, and/or presence detectors can be provided. The sensors and the actuators are distributed throughout the various parts of a structure. They typically come with a communication interface and/or with a communication controller to communicate with one another and/or with a system unit. The system unit can be installed on-site. The system unit can also be a portable computing device for commissioning and/or a software component.

The communication interface and/or the communication controller can, for instance, rely on wireless solutions such as WLAN, KNX® RF, Thread, Zigbee, and/or Enocean®. Hard-wired solutions such as Ethernet® cables or on KNX® cables are also common. The choice of any wireless or hard-wired solution is also influenced by bandwidth requirements. Sensor and/or actuators with video streaming functionality can, for instance, require more bandwidth than other types of field devices.

Manual processes of commissioning have known shortcomings. Certain sensors and/or certain actuators cannot be found in a search for devices. Also, long hours can be spent searching for devices that are not obvious to find. The situation is further exacerbated when personnel fails to correctly note down an address of an actuator or of a sensor. Those issues typically entail cost penalties and/or delays.

A patent EP3156858B1 was granted on 4 July 2018. EP3156858B1 is assigned to Siemens Schweiz AG. A corresponding patent application EP3156858A1 was filed on 16 October 2015. EP3156858B1 teaches commissioning of sensors and actuators in buildings.

According to EP3156858B1, pairs of sensors and/or actuators are identified by calculating correlation coefficients between the readings of the sensors and the settings of the actuators. A sensor $i$ will be associated with an actuator $j$ if the correlation coefficient $c_{ij}$ indicates the sensor $i$ and the actuator $j$ is the most closely correlated pair. It is also envisaged that the sensors and/or actuators estimate their locations using satellite navigation. In addition, sensor and/or actuators can determine their locations using wireless signals and triangulation.

A patent US6054950A issued on 25 April 2000. US6054950A is assigned to Multispectral Solutions, Inc (Gaithersburg, MD). A corresponding patent application 09/013,667 was filed on 26 January 1998. US6054950A teaches an ultra-wideband precision geolocation system.

The geolocation system of US6054950A comprises a plurality of ultra-wideband transceivers 12, 14, 16, 18. The ultra-wideband transceivers 12, 14, 16, 18 are arranged at fixed locations. The locations of an ultra-wideband receiver 10 is determined by time-of-flight measurements of radio frequency bursts originating from the transceivers 12, 14, 16, 18. US6054950A also teaches that a radio frequency burst can consist of a synchronization burst and of identification data. The use of such identification data enables identification of the transceiver 12, 14, 16, 18 that emitted a radio frequency burst. A radio frequency signal emitted, for example, by transceiver 12 is then less likely to be erroneously attributed to transceiver 14.

A patent application WO2007/008680A2 was filed by MOORE STEVEN, US; PULSE LINK INC, US; SANTHOFF JOHN, US on 10 July 2006. The application was published on 18 January 2007. WO2007/008680A2 deals with an ultra-wideband communications system.

WO2007/008680A2 teaches that the Federal Communications Commission allocated the radio frequency spectrum located between 3.1 Gigahertz and 10.6 Gigahertz to ultra-wideband communications. Also, radio frequency pulses or bursts must occupy a minimum of 500 Megahertz of radio frequency spectrum. Accordingly, a radio frequency pulse or burst occupies a large amount of radio frequency spectrum.

Prior art documents US 2009/066473 A1 (SIMONS PAUL R [GB]) 12 March 2009 (2009-03-12) and US 2006/074494 A1 (MCFARLAND NORMAN R [US]) 6 April 2006 (2006-04-06) disclose generating pairs of data that associate the component calculated position with the component MAC address. The component location is thus associated with a layer 2 element of the OSI model.

Prior art document WO 2017/062846 A1 (TERRALUX INC [US]) 13 April 2017 (2017-04-13) discloses a control fob that relays identifying information to a router/gateway. The control fob and the router/gateway are separate units. The router has no location data.

The instant disclosure improves on processes for installation and for commissioning of HVAC components in buildings. The present disclosure harnesses ultra-wideband transceivers to locate HVAC components such as sensors and/or actuators.

Summary

The present invention is defined by the append independent claims 1, 11 and 12. Optional aspects of the invention are defined by the dependent claims.

Brief description of the drawings

The drawings that accompany the detailed description can be briefly described as follows:

FIG 1 is a schematic view of system having a component selected for configuration.
FIG 2 illustrates a system wherein a system unit triggers a plurality of ultra-wideband transceivers.
FIG 3 depicts a structure having a plurality of components.

Detailed decription

Various features will become apparent to those skilled in the art from the following detailed description of the disclosed non-limiting embodiments. In the possible cases where said embodiments are not according to the invention as defined by the appended independent claims 1, 11 and 12, they are present for illustration purposes only.

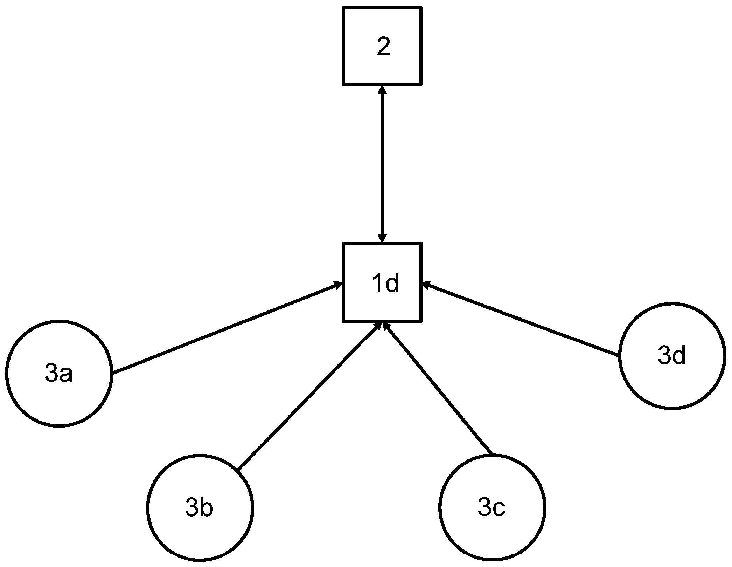

FIG 1 depicts a selected component 1d in operative communication with a system unit 2. The selected component 1d is, by way of non-limiting example, selected from the groups of

- flow control components and/or
- sensor components and/or
- actuator components and/or
- input control components.

The connection between the selected component 1d and the system unit 2 can be bidirectional. A bidirectional connection between the selected component 1d and the system unit 2 affords flexibility.
The selected component 1d is also in operative communication with a plurality of ultra-wideband transceivers 3a - 3d. The connection between the selected component 1d and the plurality of ultra-wideband transceivers 3a - 3d can be bidirectional. A bidirectional connection affords flexibility.
It is also envisaged that the selected component 1d is in operative communication with each of the ultra-wideband transceivers 3a - 3d. The connection between the selected component 1d and each of the ultra-wideband transceivers 3a - 3d can be bidirectional. A bidirectional connection affords flexibility. The connection between the selected component 1d and each of the ultra-wideband transceivers 3a - 3d can also be unidirectional. Communication from each of the ultra-wideband transceivers 3a - 3d to the selected component 1d is facilitated by such a unidirectional connection. A unidirectional connection reduces complexity.
Let $R_a$ be the distance of ultra-wideband transceiver 3a from the selected component 1d, $R_b$ be the distance of ultra-wideband transceiver 3b from the selected component 1d, etc. Also, let $\Delta_{ab}$ be a delay between transmittals of ultra-wideband radio frequency pulses by transceivers 3a and 3b, $\Delta_{bc}$ be a delay between transmittals of ultra-wideband radio frequency pulses by transceivers 3b and 3c, etc. An ultra-wideband radio frequency pulse from ultra-wideband transmitter 3a arrives at the selected component 1d at a time $t_a$, an ultra-wideband radio frequency pulse from ultra-wideband transmitter 3b arrives at the selected component 1d at a time $t_b$, etc. These quantities are related by the speed of light $c$:

$$\frac{\Delta_{ab}}{c} + \frac{R_b}{c} = \frac{R_a}{c} + (t_b - t_a)$$

$$\frac{\Delta_{bc}}{c} + \frac{R_c}{c} = \frac{R_b}{c} + (t_c - t_b)$$

These relationships lead to conic sections described by the equations

$$f(R_a, R_b) = d_{ab}$$

$$f(R_a, R_b) = d_{bc}$$

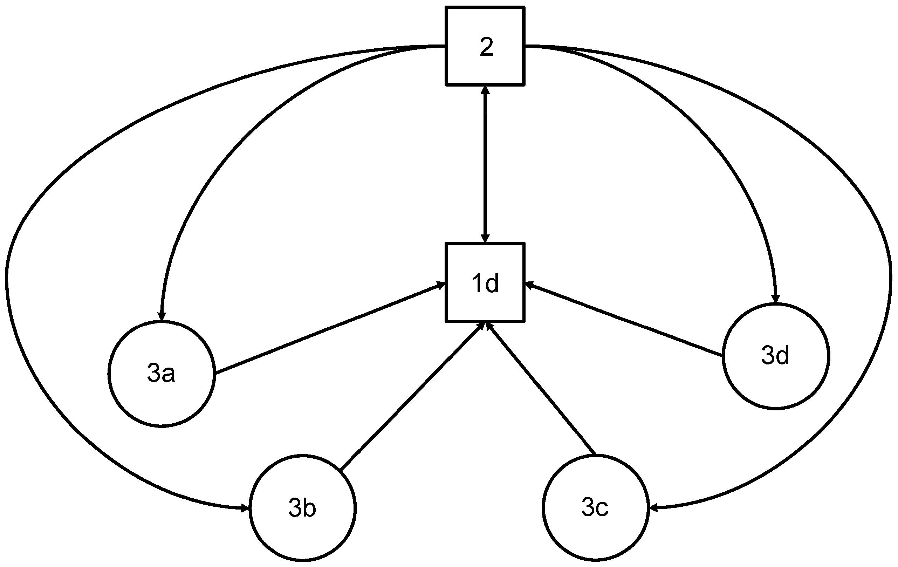

Two such equations and three ultra-wideband transmitters enable localisation of a selected component 1d in two dimensions. Three such equations and four ultra-wideband transceivers 3a - 3d are required to locate the selected component 1d in three dimensions. The transmittals of pulses and/or of bursts by the ultra-wideband transceivers 3a - 3d can be triggered by a system unit 2. FIG 2 shows a plurality of trigger signals originating from the system unit 2 and propagating toward the ultra-wideband transceivers 3a - 3d. To that end, the system unit 2 is in operative communication with the ultra-wideband transceivers 3a - 3d.
The system unit 2 is also in operative communication with a plurality of ultra-wideband transceivers 3a - 3d. The connection between the system unit 2 and the plurality of ultra-wideband transceivers 3a - 3d can be bidirectional. A bidirectional connection affords flexibility. The connection between the system unit 2 and the plurality of ultra-wideband transceivers 3a - 3d can also be unidirectional. Communication from the plurality of ultra-wideband transceivers 3a - 3d to the system unit 2 is facilitated by such a unidirectional connection. A unidirectional connection reduces complexity.
It is also envisaged that the system unit 2 is in operative communication with each of the ultra-wideband transceivers 3a - 3d. The connection between the system unit 2 and each of the ultra-wideband transceivers 3a - 3d can be bidirectional. A bidirectional connection affords flexibility. The connection between the system unit 2 and each of the ultra-wideband transceivers 3a - 3d can also be unidirectional. Communication from each of the ultra-wideband transceivers 3a - 3d to the system unit 2 is facilitated by such a unidirectional connection. A unidirectional connection reduces complexity.

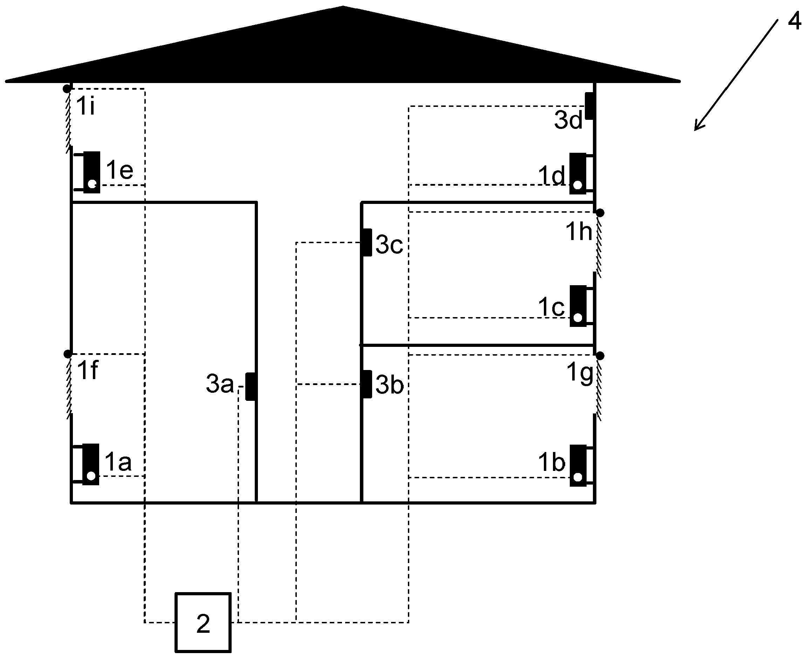

The structure 4 as shown on FIG 3 is any commercial, residential and/or industrial building. The structure 4 comprises a plurality of spaces such as rooms. The spaces of the structure 4 have a plurality of actuator components 1a - 1e and a plurality of sensor components 1f - 1i. The actuator components 1a - 1e as shown on FIG 3 can be valve actuators of room heaters and/or cooling devices and/or heating and cooling devices such as fan coil units. The actuator components can also 1a - 1e actuate window blinds. Other actuators such as damper actuators for ducts can be employed in the structure 4. They can be configured in accordance with the embodiments disclosed herein.

The sensor components 1f - 1i are, by way of non-limiting example, thermometers, pressure sensors, humidity sensors, lighting sensors, presence detectors, air quality sensors, sensors for particulate matter or any combination thereof. It is envisaged that the sensors 1f-1i are provided by a thermostat such as a smart thermostat and/or by another room unit and/or by any room device that measures temperature. The sensor components 1f - 1i can, by way of another example, also be provided by fire detectors and/or by alarm units. According to an aspect of the present disclosure, the sensor components 1f- 1f, are part of standard infrastructure such as computers or internet routers having temperature sensors etc.

The structure 4 also comprises a plurality of ultra-wideband transceivers 3a - 3d having predetermined location information. In a special embodiment, a building controller and/or a building sensor and/or a building actuator comprises an ultra-wideband transceiver 3a - 3d. It is envisaged that a plurality of such building controllers and/or building sensors and/or building actuators comprises the plurality of ultra-wideband transceivers 3a - 3d. It is envisaged that at least one of the ultra-wideband transceivers 3a - 3d is operable to estimate and/or to determine its location. To that end, each ultra-wideband transceiver 3a - 3d can have a circuit component for satellite navigation such as a global positioning system and/or a global navigation satellite system. Every ultra-wideband transceiver 3a - 3d can also have a circuit component harnessing another technology for navigation or object location, or for individual configuration of location.

Any steps of a method according to the present disclosure can be embodied in hardware, in a software module executed by a processor, in a software module executed by a processor inside a container using operating-system-level virtualization, in a cloud computing arrangement, or in a combination thereof. The software can include a firmware, a hardware driver run in the operating system, or an application program. Thus, the disclosure also relates to a computer program product for performing the operations presented herein. If implemented in software, the functions described can be stored as one or more instructions on a computer-readable medium. Some examples of storage media that can be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

As described in detail herein, the instant disclosure teaches a method of configuring a selected component (1a - 1i) of a structure (4), the structure (4) comprising one or more components (1a - 1i) to be configured, the one or more components (1a - 1i) to be configured being selected to be from the groups of flow control components, sensor components or input control components, each of the one or more components (1a - 1i) to be configured having a component controller storing a unique address of the component (1a - 1i) and having an electronic transmitter and an electronic receiver, the component controller being in operative communication with a system unit (2) via the electronic transmitter and via the electronic receiver, the structure (4) further comprising three or more ultra-wideband transceivers (3a - 3d) having known physical locations, the method comprising the steps of:

providing the system unit (2) with a configuration list having for each component (1a - 1i) to be configured a first pair of data, the first pair of data comprising physical location data and a system location identity;
selecting a component (1a - 1i) from among the one or more components (1a - 1i) to be configured;
the system unit (2) transmitting an identification request signal to the selected component (1a - 1i);
in response to the identification request signal, the selected component (1a - 1i) using its component controller to transmit via its electronic transmitter its unique address to the system unit (2);
each ultra-wideband transceiver (3a - 3d) of the three or more ultra-wideband transceivers (3a - 3d) transmitting an ultra-wideband radio frequency pulse to the selected component (1a - 1i);
the component controller of the selected component (1a - 1i) registering a time of arrival for each transmitted ultra-wideband radio frequency pulse;
producing component location data by locating the selected component (1a - 1i) based on the known physical locations and based on the registered times of arrival;
determining a system location identity of the selected component (1a - 1i) by matching the component location data with the physical location data of the configuration list;
the system unit (2) producing a second pair of data, the second pair of data comprising the unique address of the selected component (1a - 1i) and the determined system location identity; and
the system unit (2) recognising the selected component (1a - 1i) by the determined system location identity of the second pair of data.

In an embodiment, the ultra-wideband radio frequency pulses transmitted by each ultra-wideband transceiver (3a - 3d) of the three or more ultra-wideband transceivers (3a - 3d) comprise physical location information of the respective ultra-wideband transceiver (3a - 3d) to afford production of component location data at the selected component (1a - 1i) instead of at the system unit (2). The location information comprises absolute position coordinates and/or relative position coordinates. The location information can also comprise estimated accuracies of the absolute position coordinates and/or estimated accuracies of the relative position coordinates.

According to a related aspect of the present disclosure, a method described herein comprises the step of:

producing component location data by locating the selected component (1a- 1i) based on the physical location information transmitted by each ultra-wideband transceiver (3a - 3d) of the three or more ultra-wideband transceivers (3a - 3d) and based on the registered times of arrival.

It is envisaged that the instant disclosure teaches any of the methods described herein,

wherein the selected component (1a - 1i) comprises an ultra-wideband transceiver; and wherein the method comprises the step of:
after matching the component location data with the physical location data of the configuration list:
adding the selected component (1a - 1i) to the three or more ultra-wideband transceivers (3a - 3d) with known locations.

It is still envisaged that the instant disclosure teaches any of the methods described herein, wherein the selected component (1a - 1i) comprises an ultra-wideband transceiver; and wherein the method comprises the steps of:

estimating position error data by calculating error data for the produced component location data;
after matching the component location data with the physical location data of the configuration list and if the estimated position error is less than a predefined threshold of 500 millimeters and/or 250 millimeters and/or 125 millimeters:
adding the selected component (1a - 1i) to the three or more ultra-wideband transceivers (3a - 3d) with known locations.

The present disclosure also teaches any of the methods described herein comprising the step of the using the system unit (2) to transmit an identification request signal to the selected component (1a - 1i).

It is envisaged that the one or more components (1a - 1i) to be configured are in operative communication with the system unit (2). It is also envisaged that the selected component (1a - 1i) is in operative communication with the system unit (2). It is still envisaged that the system unit (2) is in operative communication with the three or more ultra-wideband transceivers (3a - 3d). It is still further envisaged that the selected component (1a - 1i) is in operative communication with the three or more ultra-wideband transceivers (3a - 3d). It is yet further envisaged that the one or more components (1a - 1i) to be configured are in operative communication with the three or more ultra-wideband transceivers (3a - 3d).

The method of configuring a selected component (1a - 1i) of a structure (4) advantageously is a method of configuring a selected component (1a - 1i) in a structure (4). According to an aspect of the instant disclosure, the method of configuring a selected component (1a - 1i) of a structure (4) is a method of configuring a selected component (1a - 1i) in an air treatment system. The method of configuring a selected component (1a - 1i) in an air treatment system advantageously is a method of configuring a selected component (1a - 1i) of an air treatment system. The air treatment system preferably comprises a heating, ventilation, and/or air conditioning system. According to an aspect of the instant disclosure, the air treatment system comprises a heating, ventilation, and/or air conditioning installation.

According to an aspect of the instant disclosure, the method of configuring one or more components (1a - 1i) in a structure (4) is a method of configuring one or more components (1a - 1i) in an air treatment system. The method of configuring one or more components (1a - 1i) in an air treatment system advantageously is a method of configuring one or more components (1a - 1i) of an air treatment system. The air treatment system preferably comprises a heating, ventilation, and/or air conditioning system. According to an aspect of the instant disclosure, the air treatment system comprises a heating, ventilation, and/or air conditioning installation.

The one or more components (1a - 1i) to be configured are advantageously connected to a system unit (2) when the one or more components (1a - 1i) are configured. The one or more components (1a - 1i) to be configured are ideally connected to the system unit (2) when the one or more components (1a - 1i) are configured and when the structure (4) is in use. The one or more components (1a - 1i) to be configured are ideally connected to the system unit (2) when the one or more components (1a - 1i) are configured and when the air treatment system is in use.

In an embodiment, the component controller of each component (1a - 1i) comprises a microcontroller and/or a microprocessor. It is also envisaged that the component controller of each component (1a - 1i) is or comprises an electronic control unit. The component controller of each component (1a - 1i) can also have a memory such as a non-volatile memory. The memory of the component controller of each component (1a - 1i) is advantageously in operative communication with the microcontroller and/or with the microprocessor and/or with the electronic control unit.

According to an aspect of the present disclosure, the system unit (2) comprises a microcontroller and/or a microprocessor. It is also envisaged that the system unit (2) is or comprises an electronic control unit. The system unit (2) can also have a memory such as a non-volatile memory. The memory of the system controller of the system unit (2) is advantageously in operative communication with the microcontroller and/or with the microprocessor and/or with the electronic control unit.

The instant disclosure further teaches any of the methods described herein comprising the step of the system unit (2) storing the first pair of data. The instant disclosure still further teaches any of the methods described herein comprising the step of a system controller of the system unit (2) storing the first pair of data in a non-volatile memory of the system controller. The instant disclosure still further teaches any of the methods described herein comprising the step of a system controller of the system unit (2) storing the first pair of data in a non-volatile memory of the system unit (2). The instant disclosure also teaches any of the methods described herein comprising the step of the system unit (2) storing the second pair of data. The instant disclosure yet further teaches any of the methods described herein comprising the step of a system controller of the system unit (2) storing the second pair of data in a non-volatile memory of the system controller. The instant disclosure yet further teaches any of the methods described herein comprising the step of a system controller of the system unit (2) storing the second pair of data in a non-volatile memory of the system unit (2).

Typically, the component controller is in operative communication with the system unit (2) via the electronic transmitter for transmitting an input signal to the system unit (2). The input signal can be used to by the system unit (2) to compute a control output command and/or an output signal. Also, the component controller is in operative communication with the system unit (2) via the electronic receiver for receiving an output signal from the system unit (2). The output signal can be used to control the selected component (1a - 1i).

Any of the methods disclosed herein advantageously also comprises the step of the system unit (2) storing the second pair of data such that the system unit (2) can recognise the selected component (1a - 1i) by the system location identity of the second pair of data. The system unit (2) can have a memory such as a non-volatile memory for storing the second pair of data.

Any of the methods disclosed herein preferably also comprises the step of transmitting the second pair of data to the system unit (2) such that the system unit (2) can recognise the selected component (1a - 1i) by the system location identity of the second pair of data.

Any of the methods disclosed herein ideally also comprises the step of employing the three or more ultra-wideband transceivers (3a - 3d) to locate the selected component (1a - 1i) at its intended physical location. The method ideally comprises the step of employing the three or more ultra-wideband transceivers (3a - 3d) to locate the selected component (1a - 1i) at its intended physical location in the structure (4).

According to an aspect of the present disclosure, a system description is or comprises a system description of the structure (4).

An ultra-wideband transceiver comprises an ultra-wideband transmitter and an ultra-wideband receiver. A set of ultra-wideband transceivers (3a - 3d) comprises a plurality of ultra-wideband transceivers (3a - 3d), wherein each ultra-wideband transceiver (3a - 3d) of the plurality of ultra-wideband transceivers (3a - 3d) comprises an ultra-wideband transmitter and an ultra-wideband receiver.

The present disclosure further teaches any of the methods described herein, wherein the structure (4) comprises four or more ultra-wideband transceivers (3a - 3d) having known physical locations, the method comprising the step of each ultra-wideband transceiver (3a - 3d) of the four or more ultra-wideband transceivers (3a - 3d) transmitting an ultra-wideband radio frequency pulse. The present disclosure still further teaches any of the methods described herein, wherein the structure (4) comprises four or more ultra-wideband transceivers (3a - 3d) having known physical locations, the method comprising the step of each ultra-wideband transceiver (3a - 3d) of the four or more ultra-wideband transceivers (3a - 3d) transmitting an ultra-wideband radio frequency pulse to the selected component (1a - 1i). The present disclosure yet further teaches any of the methods described herein, wherein the structure (4) comprises four or more ultra-wideband transceivers (3a - 3d) having known physical locations, the method comprising the step of each ultra-wideband transceiver (3a - 3d) of the four or more ultra-wideband transceivers (3a - 3d) transmitting an ultra-wideband radio frequency pulse directed to the selected component (1a - 1i). More than three ultra-wideband transceivers (3a - 3d) afford localisation in three dimensions. By contrast, a maximum of three ultra-wideband transceivers affords localisation in two dimensions and limits system complexity.

The electronic transmitter preferably comprises a digital transmitter. The electronic transmitter is advantageously configured to transmit data to the system unit (2) using a predetermined communication protocol. The electronic transmitter is ideally configured to transmit data to the system unit (2) using a digital communication bus. The electronic receiver preferably comprises a digital receiver. The electronic receiver is advantageously configured to receive data from the system unit (2) using a predetermined communication protocol. The electronic receiver is ideally configured to receive data from the system unit (2) using a digital communication bus.

The instant disclosure also teaches any of the methods described herein, wherein the structure (4) comprises four or more ultra-wideband transceivers (3a - 3d) having known physical positions, the method comprising the step of each ultra-wideband transceiver (3a - 3d) of the four or more ultra-wideband transceivers (3a - 3d) having known physical positions transmitting an ultra-wideband radio frequency pulse to the selected component (1a - 1i). It is envisaged that the known physical positions of the three or more ultra-wideband transceivers (3a - 3d) are known physical locations of the three or more ultra-wideband transceivers (3a - 3d). The known physical positions of the three or more ultra-wideband transceivers (3a - 3d) can be known to the system unit (2). The known physical positions of the three or more ultra-wideband transceivers (3a - 3d) can also be known to the selected component (1a - 1i) and/or to the component controller of the selected component (1a - 1i).

The instant disclosure further teaches any of the methods described herein comprising the step of using the configuration list to identify a physical location of the selected component (1a - 1i). The instant disclosure yet further teaches any of the methods described herein comprising the step of using the configuration list to identify a physical location of the selected component (1a - 1i) in the structure (4).

The instant disclosure further teaches any of the methods described herein comprising the step of producing component location data by locating the selected component (1a - 1i) based on the known physical locations and/or based on the registered times of arrival and/or based on data concerning building information models. The data concerning building information models preferably follow at least one of the following standards:

- National Building Information Modeling Standard for the United States of America, published on 18 December 2007, version 2,
- National Building Information Modeling Standard for the United States of America, published in 2015, version 3,
- BIM-reference for Germany, file reference 10.08.17.7-12.08, published in 2013,
- British Standard 8536-2:2016,
- ONORM A 6241-2:2015.

The data concerning building information models are ideally applicable to the structure (4). In an embodiment, the system unit (2) has a memory such as a non-volatile memory storing the data concerning building information models. In another embodiment, the component controller of the selected component (1a - 1i) has a memory such as a non-volatile memory storing the data concerning building information models.

The present disclosure also teaches any of the methods described herein comprising the step of determining a system location identity of the selected component (1a - 1i) by matching the component location data with the physical location data of the first pairs of data of the configuration list.

It is envisaged that the first pair of data is or comprises a location data set. The configuration list thus has for each component (1a - 1i) to be configured a location data set, the location data set comprising physical location data and a system location identity. It is still envisaged that the first pair of data is or comprises a location pair of data. The configuration list thus has for each component (1a- 1i) to be configured a location pair of data, the location pair of data comprising physical location data and a system location identity.

The second pair of data is or comprises an address resolution data set. The address resolution data set comprises the unique address of the selected component (1a - 1i) and the determined system location identity. It is also envisaged that the second pair of data is or comprises an address resolution pair of data. The address resolution pair of data comprises the unique address of the selected component (1a - 1i) and the determined system location identity.

The instant disclosure also teaches any of the methods described herein comprising the step of using the configuration list to select a component (1a - 1i) from among the one or more components (1a - 1i) to be configured.

The present disclosure also teaches any of the aforementioned methods, wherein the unique address is marked on the selected component (1a - 1i) and wherein the method comprises the step of the system unit (2) reading the unique address on the selected component (1a - 1i).

The method advantageously comprises the step of the system unit (2) using the marking to selectively read the unique address for the selected component (1a - 1i). The method ideally comprises the step of the system unit (2) using the marking to selectively read the unique address of the selected component (1a - 1i). The method ideally comprises the step of the system unit (2) using the marking to selectively read the unique address on the selected component (1a - 1i).

The method advantageously comprises the step of the system unit (2) using the marking to selectively and optically scan the unique address for the selected component (1a - 1i). The method ideally comprises the step of the system unit (2) using the marking to selectively and optically scan the unique address of the selected component (1a - 1i). The method ideally comprises the step of the system unit (2) using the marking to selectively and optically scan the unique address on the selected component (1a - 1i).

The present disclosure further teaches any of the aforementioned methods, wherein the selected component (1a - 1i) has an indicator connected to its the component controller, the method comprising the steps of:

the system unit (2) selecting a component (1a - 1i) from among the one or more components (1a - 1i) to be configured;

the system unit (2) transmitting a selection signal to the selected component (1a-1i); and

the component controller of the selected component (1a - 1i) receiving the selection signal and in response to the selection signal activating the indicator to indicate that the selected component (1a - 1i) has been selected by the system unit (2).

In an embodiment, the selection signal is the same as the identification request signal. In an alternate embodiment, the selection signal is different from the identification request signal. According to an aspect, each of the one or more components (1a - 1i) has an indicator connected to the respective component controller, the method comprising the steps of:

the system unit (2) transmitting a selection signal to the selected component (1a-1i); and

the component controller of the selected component (1a- 1i) receiving the selection signal and in response to the selection signal activating the indicator to indicate that the selected component (1a - 1i) has been selected by the system unit (2).

The present disclosure yet further teaches any of the aforementioned methods, wherein the method comprises the steps of:

assigning the unique address to each component (1a - 1i) to be configured; and

storing in the component controller of each component (1a - 1i) to be configured the assigned unique address.

The instant disclosure also teaches any of the methods described herein comprising the steps of:

assigning the unique address to each component (1a - 1i) to be configured; and

storing the assigned unique address in a non-volatile memory of the component controller of the respective component (1a - 1i).

The present disclosure still teaches any of the aforementioned methods, wherein the method comprises the step of placing the system unit (2) to be in reach for communication with the selected component (1a - 1i).

In a special embodiment, the method comprises the step of placing the system unit (2) to be in reach for wireless communication with the selected component (1a - 1i). The electronic transmitter advantageously comprises a wireless transmitter. The electronic receiver advantageously comprises a wireless receiver.

According to an aspect of the present disclosure, the method comprises the step of placing the system unit (2) to be in reach for wireless communication and/or in reach for ultra-wideband communication with the three or more ultra-wideband transceivers (3a - 3d).

The present disclosure also teaches any of the aforementioned methods, wherein the method comprises the steps of:

calculating differences between the times of arrival registered by the component controller of the selected component (1a - 1i); and

producing component location data by locating the selected component (1a - 1i) based on the known physical locations and based on the calculated differences.

The instant disclosure also teaches any of the methods described herein comprising the steps of:

the component controller of the selected component (1a - 1i) calculating differences between the times of arrival registered by the component controller of the selected component (1a - 1i);

the component controller of the selected component (1a - 1i) using its electronic transmitter to transmit the calculated differences to the system unit (2); and

the system unit (2) producing component location data by locating the selected component (1a - 1i) based on the known physical locations and based on the calculated differences.

The system unit (2) ideally has a memory such as a non-volatile memory storing the known physical locations of the three or more ultra-wideband transceivers (3a - 3d).

The instant disclosure further teaches any of the methods described herein comprising the steps of:

the component controller of the selected component (1a - 1i) calculating differences between the times of arrival registered by the component controller of the selected component (1a - 1i);

the component controller of the selected component (1a - 1i) producing component location data based on the known physical locations and based on the calculated differences; and

the component controller of the selected component (1a - 1i) using the electronic transmitter of the selected component (1a - 1i) to transmit the component location data to the system unit (2).

The component controller of the selected component (1a - 1i) ideally has a memory such as a non-volatile memory storing the known physical locations of the three or more ultra-wideband transceivers (3a - 3d).

The present disclosure further teaches any of the aforementioned methods, wherein the selected component (1a - 1i) comprises an ultra-wideband receiver and wherein the component controller of the selected component (1a - 1i) is in operative communication with the ultra-wideband receiver of the selected component (1a - 1i), the method comprising the steps of:

each ultra-wideband transceiver (3a - 3d) of the three or more ultra-wideband transceivers (3a - 3d) transmitting an ultra-wideband radio frequency pulse;

the selected component (1a - 1i) employing its ultra-wideband receiver to receive the transmitted ultra-wideband radio frequency pulses; and

the component controller of the selected component (1a - 1i) registering a time of arrival for each received ultra-wideband radio frequency pulse.

In an embodiment, the ultra-wideband receiver of the selected component (1a - 1i) comprises the electronic receiver of the selected component (1a - 1i). In an alternate embodiment, the ultra-wideband receiver of the selected component (1a - 1i) differs from the electronic receiver of the selected component (1a - 1i).

The ultra-wideband radio frequency pulse ideally comprises radio frequency signals covering at least 500 Megahertz of radio frequency spectrum. The ultra-wideband radio frequency pulse is envisaged to occupy radio frequencies between 3.1 Gigahertz and 10.6 Gigahertz. The ultra-wideband radio frequency pulse typically has a duration of less than one nanosecond. The duration of the pulse can be measured between the time that the amplitude of the pulse reaches half its peak amplitude and the time, preferably the last time, that the amplitude of the pulse drops to half its peak amplitude.

The ultra-wideband radio frequency pulses ideally comprise radio frequency signals covering at least 500 Megahertz of radio frequency spectrum. The ultra-wideband radio frequency pulses are envisaged to occupy radio frequencies between 3.1 Gigahertz and 10.6 Gigahertz. The ultra-wideband radio frequency pulses typically have durations of less than one nanosecond. Durations of pulses can be measured between the time that an amplitude of the pulse reaches half its peak amplitude and the time, preferably the last time, that the amplitude of the pulse drops to half its peak amplitude.

The present disclosure still further teaches any of the aforementioned methods, wherein the system unit (2) comprises an ultra-wideband transmitter, the method comprising the steps of:

the system unit (2) employing its ultra-wideband transmitter to transmit a trigger signal to at least one ultra-wideband transceiver (3a - 3d) of the three or more ultra-wideband transceivers (3a - 3d); and

the at least one ultra-wideband transceiver (3a - 3d) of the three or more ultra-wideband transceivers (3a - 3d) receiving the trigger signal and transmitting an ultra-wideband radio frequency pulse in response to the trigger signal.

The instant disclosure also teaches any of the methods described herein, wherein the system unit (2) comprises an ultra-wideband transmitter, the method comprising the steps of:

the system unit (2) employing its ultra-wideband transmitter to transmit trigger signals to the three or more ultra-wideband transceivers (3a - 3d); and

each ultra-wideband transceiver (3a - 3d) of the three or more ultra-wideband transceivers (3a - 3d) receiving a trigger signal and transmitting an ultra-wideband radio frequency pulse in response to the received trigger signal.

The instant disclosure also teaches any of the methods described herein, wherein the system unit (2) comprises an ultra-wideband transmitter, the method comprising the steps of:

the system unit (2) employing its ultra-wideband transmitter to iteratively transmit trigger signals, each trigger signal being directed to at least one ultra-wideband transceiver (3a - 3d) of the three or more ultra-wideband transceivers (3a - 3d); and

each ultra-wideband transceiver (3a - 3d) of the three or more ultra-wideband transceivers (3a - 3d) receiving at least one trigger signal and transmitting an ultra-wideband radio frequency pulse in response to the received at least one trigger signal.

The instant disclosure further teaches any of the methods described herein, wherein the system unit (2) comprises an ultra-wideband transmitter, the method comprising the steps of:

the system unit (2) employing its ultra-wideband transmitter to iteratively transmit trigger signals, each trigger signal being addressed to at least one ultra-wideband transceiver (3a - 3d) of the three or more ultra-wideband transceivers (3a - 3d); and

each ultra-wideband transceiver (3a - 3d) of the three or more ultra-wideband transceivers (3a - 3d) receiving at least one trigger signal and transmitting an ultra-wideband radio frequency pulse in response to the received at least one trigger signal.

The present disclosure yet further teaches any of the aforementioned methods, wherein the selected component (1a - 1i) comprises an ultra-wideband transmitter, the method comprising the steps of:

the selected component (1a - 1i) employing its ultra-wideband transmitter to transmit a trigger signal to at least one ultra-wideband transceiver (3a - 3d) of the three or more ultra-wideband transceivers (3a - 3d); and

the at least one ultra-wideband transceiver (3a - 3d) of the three or more ultra-wideband transceivers (3a - 3d) receiving the trigger signal and transmitting an ultra-wideband radio frequency pulse in response to the trigger signal.

The instant disclosure also teaches any of the methods described herein, wherein the selected component (1a - 1i) comprises an ultra-wideband transmitter, the method comprising the steps of:

the selected component (1a - 1i) employing its ultra-wideband transmitter to transmit trigger signals to the three or more ultra-wideband transceivers (3a - 3d); and
each ultra-wideband transceiver (3a - 3d) of the three or more ultra-wideband transceivers (3a - 3d) receiving a trigger signal and transmitting an ultra-wideband radio frequency pulse in response to the received trigger signal.

The instant disclosure also teaches any of the methods described herein, wherein the selected component (1a - 1i) comprises an ultra-wideband transmitter, the method comprising the steps of:

the selected component (1a - 1i) employing its ultra-wideband transmitter to iteratively transmit trigger signals, each trigger signal being addressed to and/or directed to at least one ultra-wideband transceiver (3a - 3d) of the three or more ultra-wideband transceivers (3a - 3d); and
each ultra-wideband transceiver (3a - 3d) of the three or more ultra-wideband transceivers (3a - 3d) receiving at least one trigger signal and transmitting an ultra-wideband radio frequency pulse in response to the received at least one trigger signal.

The instant disclosure also teaches any of the aforementioned methods, the method comprising the steps of:

the system unit (2) transmitting an identification request signal to the selected component (1a - 1i);
the selected component (1a - 1i) using its electronic receiver to receive the identification request signal; and
in response to receiving the identification request signal, the selected component (1a - 1i) using its component controller to transmit via its electronic transmitter its unique address to the system unit (2).

The instant disclosure still teaches a tangible machine-readable medium having a set of instructions stored thereon that when executed by one or more processors cause the one or more processors to perform any of the methods described herein.
The instant disclosure still further teaches a tangible machine-readable medium having a set of instructions stored thereon that when executed by one or more processors cause any of the system units (2) described herein to perform any of the methods described herein.
The instant disclosure yet further teaches a tangible machine-readable medium having a set of instructions stored thereon that when executed by one or more processors cause any of the systems described herein to perform any of the methods described herein.
It is envisaged that the machine-readable medium is non-transitory.
The present disclosure also teaches a system unit (2) comprising a system controller and a memory, the memory storing a configuration list for one or more components (1a - 1i) to be configured, the configuration list having for each component (1a - 1i) to be configured a first pair of data, the first pair of data comprising physical location data and a system location identity; the memory also storing known physical locations for three or more ultra-wideband transceivers (3a - 3d); the system controller being in operative communication with the memory and with the three or more ultra-wideband transceivers (3a - 3d) and being configured to:

read the configuration list from the memory;
read the known physical locations from the memory;
use the configuration list to select a component (1a - 1i) from among the one or more components (1a - 1i) to be configured;
connect to the selected component (1a - 1i) such that the selected component (1a - 1i) is in operative communication with the system unit (2);
transmit an identification request signal to the selected component (1a - 1i), the identification request signal causing the selected component (1a - 1i) to transmit a unique address of the selected component (1a - 1i) to the system unit (2);
transmit a first trigger signal, the first trigger signal causing each ultra-wideband transceiver of the three or more ultra-wideband transceivers (3a - 3d) to transmit a first ultra-wideband radio frequency pulse to the selected component (1a - 1i);
receive from the selected component (1a - 1i) times of arrival of the first ultra-wideband radio frequency pulses at the selected component (1a - 1i);
produce component location data by locating the selected component (1a - 1i) based on the known physical locations and based on the received times of arrival;
determine a system location identity of the selected component (1a - 1i) by matching the component location data with the physical location data of the configuration list;
produce a second pair of data, the second pair of data comprising the unique address of the selected component (1a - 1i) and the determined system location identity; and
recognise the selected component (1a - 1i) by the determined system location identity of the second pair of data.

The first ultra-wideband radio frequency pulses ideally comprise radio frequency signals covering at least 500 Megahertz of radio frequency spectrum. The first ultra-wideband radio frequency pulses are envisaged to occupy radio frequencies between 3.1 Gigahertz and 10.6 Gigahertz. Each of the first ultra-wideband radio frequency pulses typically has a duration of less than one nanosecond. A duration of a pulse can be measured between the time that an amplitude of the pulse reaches half its peak amplitude and the time, preferably the last time, that the amplitude of the pulse drops to half its peak amplitude.

The instant disclosure also teaches any of the system units (2) described herein, wherein the memory stores a configuration list for one or more components (1a - 1i) to be configured, the configuration list having for each component (1a - 1i) to be configured a first pair of data, the first pair of data comprising physical position data and a system location identity. It is envisaged that the physical position data are or comprise physical location data.

The instant disclosure further teaches any of the system units (2) described herein, wherein the system controller is configured to use the configuration list to identify a physical location of the selected component (1a - 1i). The instant disclosure further teaches any of the system units (2) described herein, wherein the system controller is configured to use the configuration list to identify a physical location of the selected component (1a - 1i) in a structure (4).

The instant disclosure further teaches any of the system units (2) described herein, wherein the system controller is configured to determine a system location identity of the selected component (1a - 1i) by matching the component location data with the physical location data of the first pairs of data of the configuration list.

The present disclosure also teaches any of the system units (2) described herein, wherein the system controller is configured to receive the unique address of the selected component (1a - 1i). The present disclosure further teaches any of the system units (2) described herein, wherein the system controller is configured to receive the unique address transmitted by the selected component (1a - 1i).

The present disclosure further teaches any of the system units (2) described herein, wherein the system controller is configured to transmit a first trigger signal to the three or more ultra-wideband transceivers (3a - 3d). The present disclosure further teaches any of the system units (2) described herein, wherein the system controller is configured to transmit a first trigger signal to each ultra-wideband transceiver (3a - 3d) of the three or more ultra-wideband transceivers (3a - 3d).

The present disclosure also teaches any of the system units (2) described herein, wherein the system controller is configured to:

receive from the selected component (1a - 1i) for each of the first ultra-wideband radio frequency pulses a signal indicative of a time of arrival at the selected component (1a-1i); and
produce a time of arrival at the selected component (1a - 1i) from each received signal indicative of a time of arrival at the selected component (1a - 1i).

The present disclosure further teaches any of the system units (2) described herein, wherein the system controller is configured to receive from the selected component (1a - 1i) a time of arrival at the selected component (1a - 1i) for each of the first ultra-wideband radio frequency pulses.

The present disclosure also teaches any of the system units (2) described herein, wherein the system controller is configured to:

transmit a first trigger signal,
the first trigger signal causing each ultra-wideband transceiver (3a - 3d) of the three or more ultra-wideband transceivers (3a - 3d) to transmit a first ultra-wideband radio frequency pulse to the selected component (1a - 1i), and
each of the first ultra-wideband radio frequency pulses causing the selected component (1a - 1i) to record a time of arrival at the selected component (1a - 1i) and causing the selected component (1a - 1i) to transmit the recorded times of arrival to the system unit (2).

It is envisaged that the three or more ultra-wideband transceivers (3a - 3d) is associated with the system unit (2). It is still envisaged that the selected component (1a - 1i) is associated with the system unit (2). It is still further envisaged that the one or more components (1a - 1i) to be configured are associated with the system unit (2).

The instant disclosure further teaches any of the system units (2) described herein, wherein the system controller is configured to:

transmit a first trigger signal to the three or more ultra-wideband transceivers (3a - 3d),
the first trigger signal causing each ultra-wideband transceiver (3a - 3d) of the three or more ultra-wideband transceivers (3a - 3d) to transmit a first ultra-wideband radio frequency pulse to the selected component (1a - 1i), and
each of the first ultra-wideband radio frequency pulses causing the selected component (1a - 1i) to record a time of arrival at the selected component (1a - 1i) and causing the selected component (1a - 1i) to transmit the recorded times of arrival to the system unit (2).

The instant disclosure further teaches any of the system units (2) described herein, wherein the system controller is configured to:

transmit a first trigger signal to each ultra-wideband transceiver (3a - 3d) of the three or more ultra-wideband transceivers (3a - 3d),

the first trigger signal causing each ultra-wideband transceiver (3a - 3d) of the three or more ultra-wideband transceivers (3a - 3d) to transmit a first ultra-wideband radio frequency pulse to the selected component (1a - 1i), and

each of the first ultra-wideband radio frequency pulses causing the selected component (1a - 1i) to record a time of arrival at the selected component (1a - 1i) and causing the selected component (1a - 1i) to transmit the recorded times of arrival to the system unit (2).

The instant disclosure still further teaches any of the system units (2) described herein, wherein the system controller is configured to:

transmit a first trigger signal to each ultra-wideband transceiver (3a - 3d) of the three or more ultra-wideband transceivers (3a - 3d),

the first trigger signal causing each ultra-wideband transceiver (3a - 3d) of the three or more ultra-wideband transceivers (3a - 3d) to transmit a first ultra-wideband radio frequency pulse to the selected component (1a - 1i), and

each of the first ultra-wideband radio frequency pulses causing the selected component (1a - 1i) to record a time of arrival at the selected component (1a - 1i) and causing the selected component (1a - 1i) to transmit one or more signals indicative of the recorded times of arrival to the system unit (2).

The present disclosure still teaches any of the system units (2) described herein, wherein the system controller is configured to:

receive from the selected component (1a - 1i) times of arrival at the selected component (1a - 1i) for the first ultra-wideband radio frequency pulses;

determine a probe count by counting the ultra-wideband transceivers (3a - 3d) of the three or more ultra-wideband transceivers (3a - 3d);

determine a response count by counting the received times of arrival at the selected component (1a - 1i); and

if the probe count exceeds the response count:

transmit a second trigger signal, the second trigger signal causing each ultra-wideband transceiver (3a - 3d) of the three or more ultra-wideband transceivers (3a - 3d) to transmit a second ultra-wideband radio frequency pulse to the selected component (1a - 1i).

The instant disclosure also teaches the above system unit (2), wherein the system controller is configured to:

receive from the selected component (1a - 1i) signals indicative of times of arrival at the selected component (1a - 1i) for the first ultra-wideband radio frequency pulses; and

produce received times of arrival at the selected component (1a - 1i) from the received signals indicative of times of arrival at the selected component (1a - 1i).

In an embodiment, the probe count is a transceiver count.

The present disclosure further teaches any of the system units (2) described herein, wherein the system controller is configured to receive from the selected component (1a - 1i) times of arrival at the selected component (1a - 1i) of the first ultra-wideband radio frequency pulses.

The present disclosure yet further teaches any of the system units (2) described herein, wherein the system controller is configured to receive from the selected component (1a - 1i) signals indicative of times of arrival at the selected component (1a- 1i) of the first ultra-wideband radio frequency pulses.

The instant disclosure further teaches any of the system units (2) described herein, wherein the system controller is configured to:

receive from the selected component (1a - 1i) signals indicative of times of arrival at the selected component (1a - 1i) for each of the first ultra-wideband radio frequency pulses; and

produce received times of arrival at the selected component (1a - 1i) from the received signals indicative of times of arrival at the selected component (1a - 1i).

The present disclosure further teaches any of the system units (2) described herein, wherein the system controller is configured to receive from the selected component (1a - 1i) signals indicative of times of arrival at the selected component (1a - 1i) of each of the first ultra-wideband radio frequency pulses.

The second ultra-wideband radio frequency pulses ideally comprise radio frequency signals covering at least 500 Megahertz of radio frequency spectrum. The second ultra-wideband radio frequency pulses are envisaged to occupy radio frequencies between 3.1 Gigahertz and 10.6 Gigahertz. Each of the second ultra-wideband radio frequency pulses typically has a duration of less than one nanosecond. A duration of a pulse can be measured between the time that an amplitude of the pulse reaches half its peak amplitude and the time, preferably the last time, that the amplitude of the pulse drops to half its peak amplitude.

The instant disclosure still further teaches any of the system units (2) described herein, wherein the system controller is configured to:

receive from the selected component (1a - 1i) a time of arrival at the selected component (1a - 1i) for each of the first ultra-wideband radio frequency pulses;

determine a probe count by counting the first ultra-wideband radio frequency pulses transmitted by the three or more ultra-wideband transceivers (3a - 3d); determine a response count by counting the received times of arrival at the selected component (1a - 1i); and

if the probe count exceeds the response count: transmit a second trigger signal, the second trigger signal causing each ultra-wideband transceiver (3a - 3d) of the three or more ultra-wideband transceivers (3a - 3d) to transmit a second ultra-wideband radio frequency pulse to the selected component (1a - 1i).

The present disclosure still teaches a system comprising:

a system unit (2) as described in detail herein; a structure (4) comprising one or more components (1a - 1i) to be configured, the one or more components (1a - 1i) to be configured being selected to be from the groups of flow control components, sensor components or input control components, each of the one or more components (1a - 1i) to be configured having a component controller storing a unique address of the component (1a - 1i) and having an electronic transmitter and an electronic receiver, the component controller being in operative communication with the system unit (2) via the electronic transmitter and via the electronic receiver; and the structure (4) comprising three or more ultra-wideband transceivers (3a - 3d) having known physical locations, each ultra-wideband transceiver (3a - 3d) being configured to transmit an ultra-wideband radio frequency pulse.

According to an aspect of the present disclosure, the structure (4) comprises three or more ultra-wideband transceivers (3a - 3d) having known physical locations, each ultra-wideband transceiver (3a - 3d) being configured to receive a trigger signal such as a first trigger signal and/or a second trigger signal.

In an embodiment, the trigger signal is or comprises an ultra-wideband radio frequency trigger pulse. It is also envisaged that the first trigger signal is or comprises a first ultra-wideband radio frequency trigger pulse. It is still envisaged that the second trigger signal is or comprises a second ultra-wideband radio frequency trigger pulse.

The one or more components (1a - 1i) to be configured are advantageously connected to a system unit (2) when the one or more components (1a - 1i) are configured. The one or more components (1a - 1i) to be configured are ideally connected to the system unit (2) when the one or more components (1a - 1i) are configured and when the structure (4) is in use. The one or more components (1a - 1i) to be configured are preferably connected to the system unit (2) when the one or more components (1a - 1i) are configured and when the system is in use. The one or more components (1a - 1i) to be configured are ideally connected to the system unit (2) when the one or more components (1a - 1i) are configured and when an air treatment system is in use, the system comprising the air treatment system.

The instant disclosure also teaches any of the systems described herein, wherein the one or more components (1a - 1i) to be configured are in operative communication with the system unit (2). The instant disclosure further teaches any of the systems described herein, wherein the selected component (1a - 1i) is in operative communication with the system unit (2). The instant disclosure still further teaches any of the systems described herein, wherein the system unit (2) is in operative communication with the three or more ultra-wideband transceivers (3a - 3d). The instant disclosure yet further teaches any of the systems described herein, wherein the selected component (1a - 1i) is in operative communication with the three or more ultra-wideband transceivers (3a - 3d). The instant disclosure also teaches any of the systems described herein, wherein the one or more components (1a - 1i) to be configured are in operative communication with the three or more ultra-wideband transceivers (3a - 3d).

The present disclosure also teaches any of the systems described herein, wherein the one or more components (1a - 1i) to be configured comprise a thermostat such as a smart thermostat. The present disclosure also teaches any of the systems described herein, wherein each of the more than two ultra-wideband transceivers (3a - 3d) is an integral part of a thermostat such as a smart thermostat, a controller, an actuator, and/or a sensor. That is, a plurality of thermostats such as smart thermostat, controllers, actuators, and/or sensors comprises each of the more than two ultra-wideband transceivers (3a - 3d). In a special embodiment, at least one ultra-wideband transceivers (3a - 3d) of the three or more ultra-wideband transceivers (3a - 3d) is an integral part of a thermostat such as a smart thermostat, a controller, an actuator, and/or a sensor.

The present disclosure further teaches a system comprising:

a system unit (2) as described herein; wherein the structure (4) comprises three or more ultra-wideband transceivers (3a - 3d) having known physical locations, each ultra-wideband transceiver (3a - 3d) being configured to transmit an ultra-wideband radio frequency pulse; one or more components (1a - 1i) to be installed in the structure; the three or more ultra-wideband transceivers (3a - 3d) comprising a portable device for position finding; wherein the portable device is in operative communication with the system unit (2); and wherein the portable device functions to indicate actual positions.

It is envisaged that the portable device also functions to indicate actual directions. To that end, the portable device can comprise a circuit for satellite navigation.

In an embodiment, the portable device comprises a phone such as a smart phone.

It should be understood that the foregoing relates only to certain embodiments of the disclosure and that numerous changes can be made therein without departing from the scope of the disclosure within the scope of the claims.

Reference numerals

    1a - 1g components
    2 system unit
    3a - 3d ultra-wideband transceivers
    4 structure

**Claims**

1. A method of configuring a selected component (1a - 1i) of a commercial, residential, and/or industrial building (4), the commercial, residential, and/or industrial building (4) comprising one or more components (1a - 1i) to be configured, the one or more components (1a - 1i) to be configured being selected to be from the groups of flow control components, sensor components or input control components, each of the one or more components (1a - 1i) to be configured having a component controller storing a unique address of the component (1a - 1i) and having an electronic transmitter and an electronic receiver, the component controller being in operative communication with a system unit (2) via the electronic transmitter and via the electronic receiver, the commercial, residential, and/or industrial building (4) further comprising three or more ultra-wideband transceivers (3a - 3d) having known physical locations, the method comprising the steps of:

    providing the system unit (2) with a configuration list having for each component (1a - 1i) to be configured a first pair of data, the first pair of data comprising physical location data and a system location identity;
    selecting a component (1a - 1i) from among the one or more components (1a - 1i) to be configured;
    the system unit (2) transmitting an identification request signal to the selected component (1a - 1i);
    in response to the identification request signal, the selected component (1a - 1i) using its component controller to transmit via its electronic transmitter its unique address to the system unit (2);
each ultra-wideband transceiver (3a - 3d) of the three or more ultra-wideband transceivers (3a - 3d) transmitting an ultra-wideband radio frequency pulse to the selected component (1a - 1i);
the component controller of the selected component (1a - 1i) registering a time of arrival for each transmitted ultra-wideband radio frequency pulse;
producing component location data by locating the selected component (1a - 1i) based on the known physical locations and based on the registered times of arrival;
determining a system location identity of the selected component (1a - 1i) by matching the component location data with the physical location data of the configuration list;
**characterised in that**
the system unit (2) producing a second pair of data,
the second pair of data comprising an address resolution pair of data, the address resolution pair of data comprising the unique address of the selected component (1a - 1i) and the determined system location identity; and
the system unit (2) recognising the selected component (1a - 1i) by the determined system location identity of the second pair of data.

2. The method according to claim 1, wherein the unique address is marked on the selected component (1a - 1i) and wherein the method comprises the step of the system unit (2) reading the unique address on the selected component (1a - 1i).

3. The method according to any of the claims 1 to 2, wherein the selected component (1a - 1i) has an indicator connected to its the component controller, the method comprising the steps of:

    the system unit (2) selecting a component (1a - 1i) from among the one or more components (1a - 1i) to be configured;
    the system unit (2) transmitting a selection signal to the selected component (1a - 1i); and
    the component controller of the selected component (1a - 1i) receiving the selection signal and in response to the selection signal activating the indicator to indicate that the selected component (1a - 1i) has been selected by the system unit (2).

4. The method according to any of the claims 1 to 3, wherein the method comprises the steps of:

    assigning the unique address to each component (1a - 1i) to be configured; and
storing in the component controller of each component (1a - 1i) to be configured the assigned unique address.

5. The method according to any of the claims 1 to 4, wherein the method comprises the step of placing the system unit (2) to be in reach for communication with the selected component (1a - 1i).

6. The method according to any of the claims 1 to 5, wherein the method comprises the steps of:

   calculating differences between the times of arrival registered by the component controller of the selected component (1a - 1i); and
   producing component location data by locating the selected component (1a - 1i) based on the known physical locations and based on the calculated differences.

7. The method according to any of the claims 1 to 6, wherein the selected component (1a - 1i) comprises an ultra-wideband receiver and wherein the component controller of the selected component (1a - 1i) is in operative communication with the ultra-wideband receiver of the selected component (1a - 1i), the method comprising the steps of:

   each ultra-wideband transceiver (3a - 3d) of the three or more ultra-wideband transceivers (3a - 3d) transmitting an ultra-wideband radio frequency pulse;
   the selected component (1a - 1i) employing its ultra-wideband receiver to receive the transmitted ultra-wideband radio frequency pulses; and
   the component controller of the selected component (1a - 1i) registering a time of arrival for each received ultra-wideband radio frequency pulse.

8. The method according to any of the claims 1 to 7, wherein the system unit (2) comprises an ultra-wideband transmitter, the method comprising the steps of:

   the system unit (2) employing its ultra-wideband transmitter to transmit a trigger signal to at least one ultra-wideband transceiver (3a - 3d) of the three or more ultra-wideband transceivers (3a - 3d); and
   the at least one ultra-wideband transceiver (3a - 3d) of the three or more ultra-wideband transceivers (3a - 3d) receiving the trigger signal and transmitting an ultra-wideband radio frequency pulse in response to the trigger signal.

9. The method according to any of the claims 1 to 8, wherein the selected component (1a - 1i) comprises an ultra-wideband transmitter, the method comprising the steps of:

   the selected component (1a - 1i) employing its ultra-wideband transmitter to transmit a trigger signal to at least one ultra-wideband transceiver (3a - 3d) of the three or more ultra-wideband transceivers (3a - 3d); and
   the at least one ultra-wideband transceiver (3a - 3d) of the three or more ultra-wideband transceivers (3a - 3d) receiving the trigger signal and transmitting an ultra-wideband radio frequency pulse in response to the trigger signal.

10. The method according to any of the claims 1 to 9, the method comprising the steps of:

   the system unit (2) transmitting an identification request signal to the selected component (1a - 1i);
   the selected component (1a- 1i) using its electronic receiver to receive the identification request signal; and
   in response to receiving the identification request signal, the selected component (1a - 1i) using its component controller to transmit via its electronic transmitter its unique address to the system unit (2).

11. A tangible machine-readable medium having a set of instructions stored thereon that when executed by one or more processors cause the one or more processors to perform the method according to any of the claims 1 to 10.

12. A system unit (2) comprising a system controller and a memory, the memory storing a configuration list for one or more components (1a - 1i) to be configured, the configuration list having for each component (1a - 1i) to be configured a first pair of data, the first pair of data comprising physical location data and a system location identity; the memory also storing known physical locations for three or more ultra-wideband transceivers (3a - 3d); the system controller being in operative communication with the memory and with the three or more ultra-wideband transceivers (3a - 3d) and being configured to:

   read the configuration list from the memory;
   read the known physical locations from the memory;
   use the configuration list to select a component (1a - 1i) from among the one or more components (1a - 1i) to be configured;
   connect to the selected component (1a - 1i) such that the selected component (1a-1i) is in operative communication with the system unit (2);

transmit an identification request signal to the selected component (1a - 1i), the identification request signal causing the selected component (1a - 1i) to transmit a unique address of the selected component (1a - 1i) to the system unit (2); transmit a first trigger signal, the first trigger signal causing each ultra-wideband transceiver of the three or more ultra-wideband transceivers (3a - 3d) to transmit a first ultra-wideband radio frequency pulse to the selected component (1a - 1i);

receive from the selected component (1a - 1i) times of arrival of the first ultra-wideband radio frequency pulses at the selected component (1a - 1i);

produce component location data by locating the selected component (1a - 1i) based on the known physical locations and based on the received times of arrival;

determine a system location identity of the selected component (1a - 1i) by matching the component location data with the physical location data of the configuration list;

**characterised in that**

produce a second pair of data, the second pair of data comprising an address resolution pair of data, the address resolution pair of data comprising the unique address of the selected component (1a - 1i) and the determined system location identity; and

recognise the selected component (1a - 1i) by the determined system location identity of the second pair of data.

13. The system unit (2) according to claim 12, wherein the system controller is configured to:

transmit a first trigger signal,
the first trigger signal causing each ultra-wideband transceiver (3a - 3d) of the three or more ultra-wideband transceivers (3a - 3d) to transmit a first ultra-wideband radio frequency pulse to the selected component (1a - 1i), and each of the first ultra-wideband radio frequency pulses causing the selected component (1a- 1i) to record a time of arrival at the selected component (1a - 1i) and causing the selected component (1a - 1i) to transmit the recorded times of arrival to the system unit (2).

14. The system unit (2) according to any of the claims 12 to 13, wherein the system controller is configured to:

receive from the selected component (1a - 1i) times of arrival at the selected component (1a - 1i) for the first ultra-wideband radio frequency pulses;

determine a probe count by counting the ultra-wideband transceivers (3a - 3d) of the three or more ultra-wideband transceivers (3a - 3d);

determine a response count by counting the received times of arrival at the selected component (1a - 1i); and

if the probe count exceeds the response count: transmit a second trigger signal, the second trigger signal causing each ultra-wideband transceiver (3a - 3d) of the three or more ultra-wideband transceivers (3a - 3d) to transmit a second ultra-wideband radio frequency pulse to the selected component (1a - 1i).

15. A system comprising:

a system unit (2) according to any of the claims 12 to 14;
a commercial, residential, and/or industrial building (4) comprising one or more components (1a- 1i) to be configured, the one or more components (1a - 1i) to be configured being selected to be from the groups of flow control components, sensor components or input control components, each of the one or more components (1a - 1i) to be configured having a component controller storing a unique address of the component (1a - 1i) and having an electronic transmitter and an electronic receiver, the component controller being in operative communication with the system unit (2) via the electronic transmitter and via the electronic receiver; and
the commercial, residential, and/or industrial building (4) comprising three or more ultra-wideband transceivers (3a - 3d) having known physical locations, each ultra-wideband transceiver (3a - 3d) being configured to transmit an ultra-wideband radio frequency pulse.

**Patentansprüche**

1. Verfahren zum Konfigurieren einer ausgewählten Komponente (1a bis 1i) eines Gewerbe-, Wohn- und/oder Industriegebäudes (4), wobei das Gewerbe-, Wohn- und/oder Industriegebäude (4) eine oder mehrere zu konfigurierende Komponenten (1a bis 1i) umfasst, die aus der Gruppe von Flussregelkomponenten, Sensorkomponenten oder Eingabesteuerkomponenten ausgewählt sind, wobei jede der einen oder der mehreren zu konfigurierenden Komponenten (1a bis 1i) eine Komponentenautomatisierungseinheit aufweist, die eine eindeutige Adresse der Komponente (1a bis 1i) speichert und einen elektronischen Sender und einen elektronischen Empfänger aufweist, wobei die Komponentenautomatisierungseinheit über den elektronischen Sender und den elektronischen Empfänger mit einer Systemeinheit (2) wirkverbunden ist, wobei das Gewerbe-, Wohn- und/oder Industriegebäude (4) ferner drei oder mehr Ultrabreitbandtransceiver (3a bis 3d) mit bekanntem physischem Standort umfasst, wobei das Verfahren folgende Schritte umfasst:

Bereitstellen einer Konfigurationsliste für die Systemeinheit (2), die für jede zu konfigurierende Komponente (1a bis 1i) ein erstes Datenpaar aufweist, wobei das erste Datenpaar Daten zum physischen Standort und eine Systemstandortidentität umfasst,

Auswählen einer Komponente (1a bis 1i) unter der einen oder den mehreren zu konfigurierenden Komponenten (1a bis 1i), Senden eines Identifizierungsanfragesignals zu der ausgewählten Komponente (1a bis 1i) durch die Systemeinheit (2),

Benutzen ihrer Komponentenautomatisierungseinheit durch die ausgewählte Komponente (1a bis 1i) zum Senden ihrer eindeutigen Adresse über ihren elektronischen Sender zur Systemeinheit (2) als Reaktion auf das Identifizierungsanfragesignal,

Senden eines Ultrabreitband-Funkfrequenzimpulses zu der ausgewählten Komponente (1a bis 1i) durch jeden der drei oder mehr Ultrabreitbandtransceiver (3a bis 3d),

Registrieren einer Ankunftszeit für jeden gesendeten Ultrabreitband-Funkfrequenzimpuls durch die Komponentenautomatisierungseinheit der ausgewählten Komponente (1a bis 1i),

Erzeugen von Komponentenstandortdaten durch Finden der ausgewählten Komponente (1a bis 1i) auf der Grundlage der bekannten physischen Standorte und der registrierten Ankunftszeiten,

Bestimmen einer Systemstandortidentität der ausgewählten Komponente (1a bis 1i) durch Abgleichen der Komponentenstandortdaten mit den Daten zum physischen Standort aus der Konfigurationsliste,

**dadurch gekennzeichnet, dass**

die Systemeinheit (2) ein zweites Datenpaar erzeugt,

das zweite Datenpaar ein Adressauflösungsdatenpaar umfasst, das die eindeutige Adresse der ausgewählten Komponente (1a bis 1i) und die bestimmte Systemstandortidentität umfasst, und

die Systemeinheit (2) die ausgewählte Komponente (1a bis 1i) über die bestimmte Systemstandortidentität des zweiten Datenpaars erkennt.

2. Das Verfahren nach Anspruch 1, wobei die eindeutige Adresse an der ausgewählten Komponente (1a bis 1i) verzeichnet ist und das Verfahren das Lesen der eindeutigen Adresse an der ausgewählten Komponente (1a bis 1i) durch die Systemeinheit (2) umfasst.

3. Das Verfahren nach einem der Ansprüche 1 bis 2, wobei die ausgewählte Komponente (1a bis 1i) einen mit ihrer Komponentenautomatisierungseinheit verbundenen Indikator aufweist, wobei das Verfahren folgende Schritte umfasst:

Auswählen einer Komponente (1a bis 1i) unter der einen oder den mehreren zu konfigurierenden Komponenten (1a bis 1i) durch die Systemeinheit (2),

Senden eines Auswahlsignals zu der ausgewählten Komponente (1a bis 1i) durch die Systemeinheit (2) und

Empfangen des Auswahlsignals und Aktivieren des Indikators durch die Komponentenautomatisierungseinheit der ausgewählten Komponente (1a bis 1i) als Reaktion auf das Auswahlsignal zum Anzeigen, dass die ausgewählte Komponente (1a bis 1i) von der Systemeinheit (2) ausgewählt worden ist.

4. Das Verfahren nach einem der Ansprüche 1 bis 3, das folgende Schritte umfasst:

Zuordnen der eindeutigen Adresse zu jeder zu konfigurierenden Komponente (1a bis 1i) und Speichern der zugeordneten eindeutigen Adresse in der Komponentenautomatisierungseinheit jeder zu konfigurierenden Komponente (1a bis 1i) .

5. Das Verfahren nach einem der Ansprüche 1 bis 4, das das derartige Platzieren der Systemeinheit (2) umfasst, dass diese in Reichweite für die Kommunikation mit der ausgewählten Komponente (1a bis 1i) liegt.

6. Das Verfahren nach einem der Ansprüche 1 bis 5, das folgende Schritte umfasst:

Berechnen von Differenzen zwischen der von der Komponentenautomatisierungseinheit der ausgewählten Komponente (1a bis 1i) registrierten Ankunftszeit und

Erzeugen von Komponentenstandortdaten durch Finden der ausgewählten Komponente (1a bis 1i) auf der Grundlage der bekannten physischen Standorte und der berechneten Differenzen.

7. Das Verfahren nach einem der Ansprüche 1 bis 6, wobei die ausgewählte Komponente (1a bis 1i) einen Ultrabreitbandempfänger umfasst und die Komponentenautomatisierungseinheit der ausgewählten Komponente (1a bis 1i) mit dem Ultrabreitbandempfänger der ausgewählten Komponente (1a bis 1i) wirkverbunden ist, wobei das Verfahren folgende Schritte umfasst:

Senden eines Ultrabreitband-Funkfrequenzimpulses durch jeden der drei oder mehr Ultrabreitbandtransceiver (3a bis 3d) ,
Einsetzen ihres Ultrabreitbandempfängers durch die ausgewählte Komponente (1a bis 1i) zum Empfangen der gesendeten Ultrabreitband-Funkfrequenzimpulse und
Registrieren einer Ankunftszeit für jeden empfangenen Ultrabreitband-Funkfrequenzimpuls durch die Komponentenautomatisierungseinheit der ausgewählten Komponente (1a bis 1i) .

8. Das Verfahren nach einem der Ansprüche 1 bis 7, wobei die Systemeinheit (2) einen Ultrabreitbandsender umfasst, wobei das Verfahren folgende Schritte umfasst:

Einsetzen ihres Ultrabreitbandsenders durch die Systemeinheit (2) zum Senden eines Auslösesignals zu mindestens einem der drei oder mehr Ultrabreitbandtransceiver (3a bis 3d) und Empfangen des Auslösesignals und Senden eines Ultrabreitband-Funkfrequenzimpulses als Reaktion auf das Auslösesignal durch den mindestens einen der drei oder mehr Ultrabreitbandtransceiver (3a bis 3d).

9. Das Verfahren nach einem der Ansprüche 1 bis 8, wobei die ausgewählte Komponente (1a bis 1i) einen Ultrabreitbandsender umfasst, wobei das Verfahren folgende Schritte umfasst:

Einsetzen ihres Ultrabreitbandsenders durch die ausgewählte Komponente (1a bis 1i) zum Senden eines Auslösesignals zu mindestens einem der drei oder mehr Ultrabreitbandtransceiver (3a bis 3d) und Empfangen des Auslösesignals und Senden eines Ultrabreitband-Funkfrequenzimpulses als Reaktion auf das Auslösesignal durch den mindestens einen der drei oder mehr Ultrabreitbandtransceiver (3a bis 3d).

10. Das Verfahren nach einem der Ansprüche 1 bis 9, das folgende Schritte umfasst:

Senden eines Identifizierungsanfragesignals zu der ausgewählten Komponente (1a bis 1i) durch die Systemeinheit (2) ,
Benutzen ihres elektronischen Empfängers durch die ausgewählte Komponente (1a bis 1i) zum Empfangen des Identifizierungsanfragesignals und

Benutzen ihrer Komponentenautomatisierungseinheit durch die ausgewählte Komponente (1a bis 1i) zum Senden ihrer eindeutigen Adresse über ihren elektronischen Sender zur Systemeinheit (2) als Reaktion auf das Empfangen des Identifizierungsanfragesignals.

11. Physisches, maschinenlesbares Medium, auf dem ein Satz Anweisungen gespeichert ist, die, wenn sie von einem oder mehreren Prozessoren ausgeführt werden, diese/n dazu veranlassen, das Verfahren nach einem der Ansprüche 1 bis 10 durchzuführen.

12. Systemeinheit (2) mit einer Systemautomatisierungseinheit und einem Speicher, wobei der Speicher eine Konfigurationsliste für eine oder mehrere zu konfigurierende Komponenten (1a bis 1i) speichert, wobei die Konfigurationsliste für jede zu konfigurierende Komponente (1a bis 1i) ein erstes Datenpaar aufweist, das Daten zum physischen Standort und eine Systemstandortidentität umfasst, wobei der Speicher auch bekannte physische Standorte für drei oder mehr Ultrabreitbandtransceiver (3a bis 3d) speichert, wobei die Systemautomatisierungseinheit mit dem Speicher und den drei oder mehr Ultrabreitbandtransceivern (3a bis 3d) wirkverbunden und so konfiguriert ist, dass sie:

die Konfigurationsliste aus dem Speicher ausliest,
die bekannten physischen Standorte aus dem Speicher ausliest,
die Konfigurationsliste zum Auswählen einer Komponente (1a bis 1i) unter der einen oder den mehreren zu konfigurierenden Komponenten (1a bis 1i) benutzt,
sich so mit der ausgewählten Komponente (1a bis 1i) verbindet, dass diese mit der Systemeinheit (2) wirkverbunden ist,
ein Identifizierungsanfragesignal zu der ausgewählten Komponente (1a bis 1i) sendet, das diese dazu veranlasst, eine eindeutige Adresse der ausgewählten Komponente (1a bis 1i) zur Systemeinheit (2) zu senden,
ein erstes Auslösesignal sendet, das jeden der drei oder mehr Ultrabreitbandtransceiver (3a bis 3d) dazu veranlasst, einen ersten Ultrabreitband-Funkfrequenzimpuls zu der ausgewählten Komponente (1a bis 1i) zu senden,
von der ausgewählten Komponente (1a bis 1i) Ankunftszeiten der ersten Ultrabreitband-Funkfrequenzimpulse an der ausgewählten Komponente (1a bis 1i) empfängt,
durch Finden der ausgewählten Komponente (1a bis 1i) auf der Grundlage der bekannten physischen Standorte und der empfangenen Ankunftszeiten Komponentenstandortdaten erzeugt,

eine Systemstandortidentität der ausgewählten Komponente (1a bis 1i) durch Abgleichen der Komponentenstandortdaten mit den Daten zum physischen Standort aus der Konfigurationsliste bestimmt,

**dadurch gekennzeichnet, dass**

ein zweites Datenpaar erzeugt wird, welches ein Adressauflösungsdatenpaar umfasst, das die eindeutige Adresse der ausgewählten Komponente (1a bis 1i) und die bestimmte Systemstandortidentität umfasst, und

die ausgewählte Komponente (1a bis 1i) über die bestimmte Systemstandortidentität des zweiten Datenpaars erkannt wird.

13. Die Systemeinheit (2) nach Anspruch 12, wobei die Systemautomatisierungseinheit so konfiguriert ist, dass sie:

ein erstes Auslösesignal sendet,
wobei das erste Auslösesignal jeden der drei oder mehr Ultrabreitbandtransceiver (3a bis 3d) dazu veranlasst, einen ersten Ultrabreitband-Funkfrequenzimpuls zu der ausgewählten Komponente (1a bis 1i) zu senden, und
jeder der ersten Ultrabreitband-Funkfrequenzimpulse die ausgewählte Komponente (1a bis 1i) dazu veranlasst, eine Ankunftszeit an der ausgewählten Komponente (1a bis 1i) aufzuzeichnen und die aufgezeichneten Ankunftszeiten zur Systemeinheit (2) zu senden.

14. Die Systemeinheit (2) nach einem der Ansprüche 12 bis 13, wobei die Systemautomatisierungseinheit so konfiguriert ist, dass sie:

von der ausgewählten Komponente (1a bis 1i) Ankunftszeiten der ersten Ultrabreitband-Funkfrequenzimpulse an der ausgewählten Komponente (1a bis 1i) empfängt,
durch Zählen der Ultrabreitbandtransceiver (3a bis 3d) der drei oder mehr Ultrabreitbandtransceiver (3a bis 3d) eine Messsondenanzahl bestimmt,
durch Zählen der empfangenen Ankunftszeiten an der ausgewählten Komponente (1a bis 1i) eine Antwortanzahl bestimmt und,
wenn die Messsondenanzahl die Antwortanzahl übersteigt:
ein zweites Auslösesignal sendet, das jeden der drei oder mehr Ultrabreitbandtransceiver (3a bis 3d) dazu veranlasst, einen zweiten Ultrabreitband-Funkfrequenzimpuls zu der ausgewählten Komponente (1a bis 1i) zu senden.

15. System, das Folgendes umfasst:

eine Systemeinheit (2) nach einem der Ansprüche 12 bis 14,
ein Gewerbe-, Wohn- und/oder Industriegebäude (4), das eine oder mehrere zu konfigurierende Komponenten (1a bis 1i) umfasst, die aus der Gruppe von Flussregelkomponenten, Sensorkomponenten oder Eingabesteuerkomponenten ausgewählt sind, wobei jede der einen oder der mehreren zu konfigurierenden Komponenten (1a bis 1i) eine Komponentenautomatisierungseinheit aufweist, die eine eindeutige Adresse der Komponente (1a bis 1i) speichert und einen elektronischen Sender und einen elektronischen Empfänger aufweist, wobei die Komponentenautomatisierungseinheit über den elektronischen Sender und den elektronischen Empfänger mit der Systemeinheit (2) wirkverbunden ist, und
wobei das Gewerbe-, Wohn- und/oder Industriegebäude (4) drei oder mehr Ultrabreitbandtransceiver (3a bis 3d) mit bekanntem physischem Standort umfasst, wobei jeder Ultrabreitbandtransceiver (3a bis 3d) so konfiguriert ist, dass er einen Ultrabreitband-Funkfrequenzimpuls sendet.

**Revendications**

1. Procédé de configuration d'un composant sélectionné (1a-1i) d'un bâtiment commercial, résidentiel et/ou industriel (4), le bâtiment commercial, résidentiel et/ou industriel (4) comprenant un ou plusieurs composants (1a-1i) devant être configurés, les un ou plusieurs composants (1a-1i) devant être configurés étant sélectionnés pour être issus des groupes de composants de régulation de débit, de composants capteurs ou de composants de régulation d'entrée, chacun des un ou plusieurs composants (1a-1i) devant être configurés ayant un contrôleur de composant stockant une adresse unique du composant (1a-1i) et ayant un émetteur électronique et un récepteur électronique, le contrôleur de composant étant en communication opérationnelle avec une unité système (2) via l'émetteur électronique et via le récepteur électronique, le bâtiment commercial, résidentiel et/ou industriel (4) comprenant en outre trois émetteurs-récepteurs à bande ultra large (3a-3d) ou plus ayant des emplacements physiques connus, le procédé comprenant les étapes de :

la fourniture, à l'unité système (2), d'une liste de configuration ayant, pour chaque composant (1a-1i) devant être configuré, une première paire de données, la première paire de données comprenant des données d'emplacement physique et une identité d'emplacement de système ;
la sélection d'un composant (1a-1i) parmi les un ou plusieurs composants (1a-1i) devant être

configurés ;

l'unité système (2) émettant un signal de requête d'identification vers le composant sélectionné (la-li) ;

en réponse au signal de requête d'identification, le composant sélectionné (la-li) utilisant son contrôleur de composant pour émettre via son émetteur électronique son adresse unique vers l'unité système (2) ;

chaque émetteur-récepteur à bande ultra large (3a-3d) parmi les trois émetteurs-récepteurs à bande ultra large (3a 3d) ou plus émettant une impulsion radiofréquence à bande ultra large vers le composant sélectionné (la-li) ;

le contrôleur de composant du composant sélectionné (la-li) enregistrant un temps d'arrivée pour chaque impulsion radiofréquence à bande ultra large émise ;

la production de données d'emplacement de composant par la localisation du composant sélectionné (la-li) sur la base des emplacements physiques connus et sur la base des temps d'arrivée enregistrés ;

la détermination d'une identité d'emplacement de système du composant sélectionné (la-li) par la mise en concordance des données d'emplacement de composant avec les données d'emplacement physique de la liste de configuration ; **caractérisé en ce que**

l'unité système (2) produisant une seconde paire de données,

la seconde paire de données comprenant une paire de données de résolution d'adresse, la paire de données de résolution d'adresse comprenant l'adresse unique du composant sélectionné (la-li) et l'identité d'emplacement de système déterminée ; et

l'unité système (2) reconnaissant le composant sélectionné (la-li) par l'identité d'emplacement de système déterminée de la seconde paire de données.

2. Le procédé selon la revendication 1, dans lequel l'adresse unique est marquée sur le composant sélectionné (la-li) et dans lequel le procédé comprend l'étape de l'unité système (2) lisant l'adresse unique sur le composant sélectionné (la-li).

3. Le procédé selon l'une quelconque des revendications 1 à 2, dans lequel le composant sélectionné (la-li) possède un indicateur relié à son contrôleur de composant, le procédé comprenant les étapes de :

l'unité système (2) sélectionnant un composant (la-li) parmi les un ou plusieurs composants (la-li) devant être configurés,

l'unité système (2) émettant un signal sélection vers le composant sélectionné (la-li) ; et

le contrôleur de composant du composant sélectionné (la-li) recevant le signal de sélection et en réponse au signal de sélection activant l'indicateur pour indiquer que le composant sélectionné (la-li) a été sélectionné par l'unité système (2).

4. Le procédé selon l'une quelconque des revendications 1 à 3, dans lequel le procédé comprend les étapes de :

l'attribution de l'adresse unique à chaque composant (1a-1i) devant être configuré ; et

le stockage, dans le contrôleur de composant de chaque composant (la-li) devant être configuré, de l'adresse unique attribuée.

5. Le procédé selon l'une quelconque des revendications 1 à 4, dans lequel le procédé comprend l'étape de placement de l'unité système (2) afin qu'elle soit à portée de communication avec le composant sélectionné (la-li).

6. Le procédé selon l'une quelconque des revendications 1 à 5, dans lequel le procédé comprend les étapes de :

le calcul de différences entre les temps d'arrivée enregistrés par le contrôleur de composant du composant sélectionné (la-li) ; et

la production de données d'emplacement de composant par la localisation du composant sélectionné (la-li) sur la base des emplacements physiques connus et sur la base des différences calculées.

7. Le procédé selon l'une quelconque des revendications 1 à 6, dans lequel le composant sélectionné (la-li) comprend un récepteur à bande ultra large et dans lequel le contrôleur de composant du composant sélectionné (la-li) est en communication opérationnelle avec le récepteur à bande ultra large du composant sélectionné (la-li), le procédé comprenant les étapes de :

chaque émetteur-récepteur à bande ultra large (3a-3d) parmi les trois émetteurs-récepteurs à bande ultra large (3a-3d) ou plus émettant une impulsion radiofréquence à bande ultra large ;

le composant sélectionné (la-li) employant son récepteur à bande ultra large pour recevoir les impulsions radiofréquence à bande ultra large émises ; et

le contrôleur de composant du composant sélectionné (la-li) enregistrant un temps d'arrivée pour chaque impulsion radiofréquence à bande ultra large reçue.

**8.** Le procédé selon l'une quelconque des revendications 1 à 7, dans lequel l'unité système (2) comprend un émetteur à bande ultra large, le procédé comprenant les étapes de :

l'unité système (2) employant son émetteur à bande ultra large pour émettre un signal déclencheur vers au moins un émetteur-récepteur à bande ultra large (3a-3d) parmi les trois émetteurs-récepteurs à bande ultra large (3a-3d) ou plus ; et

l'au moins un émetteur-récepteur à bande ultra large (3a - 3d) parmi les trois émetteurs-récepteurs à bande ultra large (3a - 3d) ou plus recevant le signal déclencheur et émettant une impulsion radiofréquence à bande ultra large en réponse au signal déclencheur.

**9.** Le procédé selon l'une quelconque des revendications 1 à 8, dans lequel le composant sélectionné (la-li) comprend un émetteur à bande ultra large, le procédé comprenant les étapes de :

le composant sélectionné (la-li) employant son émetteur à bande ultra large pour émettre un signal déclencheur vers au moins un émetteur-récepteur à bande ultra large (3a-3d) parmi les trois émetteurs-récepteurs à bande ultra large (3a- d) ou plus ; et

l'au moins un émetteur-récepteur à bande ultra large (3a-3d) parmi les trois émetteurs-récepteurs à bande ultra large (3a-3d) ou plus recevant le signal déclencheur et émettant une impulsion radiofréquence à bande ultra large en réponse au signal déclencheur.

**10.** Le procédé selon l'une quelconque des revendications 1 à 9, le procédé comprenant les étapes de :

l'unité système (2) émettant un signal de requête d'identification vers le composant sélectionné (la-li) ;

le composant sélectionné (la-li) utilisant son récepteur électronique pour recevoir le signal de requête d'identification ; et

en réponse à la réception du signal de requête d'identification, le composant sélectionné (la-li) utilisant son contrôleur de composant pour émettre via son émetteur électronique son adresse unique vers l'unité système (2).

**11.** Support tangible lisible par machine ayant un jeu d'instructions stockées sur celui-ci qui, lors leur exécution par un ou plusieurs processeurs, amènent les un ou plusieurs processeurs à réaliser le Le procédé selon l'une quelconque des revendications 1 à 10.

**12.** Unité système (2) comprenant un contrôleur système et une mémoire, la mémoire stockant une liste de configuration pour un ou plusieurs composants (la-li) devant être configurés, la liste de configuration ayant, pour chaque composant (la-li) devant être configuré, une première paire de données, la première paire de données comprenant des données d'emplacement physique et une identité d'emplacement de système ; la mémoire stockant également des emplacements physiques connus pour trois émetteurs-récepteurs à bande ultra large (3a-3d) ou plus ; le contrôleur système étant en communication opérationnelle avec la mémoire et avec les trois émetteurs-récepteurs à bande ultra large (3a-3d) ou plus et étant configuré pour :

lire la liste de configuration à partir de la mémoire ;

lire les emplacements physiques connus à partir de la mémoire ;

utiliser la liste de configuration pour sélectionner un composant (la-li) parmi les un ou plusieurs composants (la-li) devant être configurés ;

se connecter au composant sélectionné (la-li) de sorte que le composant sélectionné (la-li) soit en communication opérationnelle avec l'unité système (2) ;

émettre un signal de requête d'identification vers le composant sélectionné (la-li), le signal de requête d'identification amenant le composant sélectionné (la-li) à émettre une adresse unique du composant sélectionné (la-li) vers l'unité système (2) ;

émettre un premier signal déclencheur, le premier signal déclencheur amenant chaque émetteur-récepteur à bande ultra large parmi les trois émetteurs-récepteurs à bande ultra large (3a - 3d) ou plus à émettre une première impulsion radiofréquence à bande ultra large vers le composant sélectionné (la-li) ;

recevoir, à partir du composant sélectionné (la-li), des temps d'arrivée des premières impulsions radiofréquence à bande ultra large au niveau du composant sélectionné (la-li) ;

produire des données d'emplacement de composant par la localisation du composant sélectionné (la-li) sur la base des emplacements physiques connus et sur la base des temps d'arrivée reçus ;

déterminer une identité d'emplacement de système du composant sélectionné (la-li) par la mise en concordance des données d'emplacement de composant avec les données d'emplacement physique de la liste de configuration ;

**caractérisé par** le fait de

produire une seconde paire de données, la seconde paire de données comprenant une paire de données de résolution d'adresse, la paire de données de résolution d'adresse comprenant l'adresse unique du composant sélectionné (1a-1i) et l'identité d'emplacement de système déterminée ; et

reconnaître le composant sélectionné (1a-1i) par l'identité d'emplacement de système déterminée de la seconde paire de données.

**13.** L'unité système (2) selon la revendication 12, dans laquelle le contrôleur système est configuré pour :

émettre un premier signal déclencheur, le premier signal déclencheur amenant chaque émetteur-récepteur à bande ultra large (3a-3d) parmi les trois émetteurs-récepteurs à bande ultra large (3a-3d) ou plus à émettre une première impulsion radiofréquence à bande ultra large vers le composant sélectionné (1a-1i), et chacune des premières impulsions radiofréquence à bande ultra large amenant le composant sélectionné (1a-1i) à enregistrer un temps d'arrivée au niveau du composant sélectionné (1a-1i) et amenant le composant sélectionné (1a-1i) à émettre les temps d'arrivée enregistrés vers l'unité système (2) .

**14.** L'unité système (2) selon l'une quelconque des revendications 12 à 13, dans laquelle le contrôleur système est configuré pour :

recevoir, à partir du composant sélectionné (1a-1i), des temps d'arrivée au niveau du composant sélectionné (1a-1i) pour les premières impulsions radiofréquence à bande ultra large ; déterminer un nombre de sondages par le comptage des émetteurs-récepteurs à bande ultra large (3a-3d) parmi les trois émetteurs-récepteurs à bande ultra large (3a-3d) ou plus ; déterminer un nombre de réponses par le comptage des temps d'arrivée reçus au niveau du composant sélectionné (1a-1i) ; et si le nombre de sondages dépasse le nombre de réponses : émettre un second signal déclencheur, le second signal déclencheur amenant chaque émetteur-récepteur à bande ultra large (3a-3d) parmi les trois émetteurs-récepteurs à bande ultra large (3a-3d) ou plus à émettre une seconde impulsion radiofréquence à bande ultra large vers le composant sélectionné (1a-1i).

**15.** Système comprenant :

une unité système (2) selon l'une quelconque des revendications 12 à 14 ; un bâtiment commercial, résidentiel et/ou industriel (4) comprenant un ou plusieurs composants (1a-1i) devant être configurés, les un ou plusieurs composants (1a-1i) devant être configurés étant sélectionnés pour être issus des groupes de composants de régulation de débit, de composants capteurs ou de composants de régulation d'entrée, chacun des un ou plusieurs composants (1a-1i) devant être configurés ayant un contrôleur de composant stockant une adresse unique du composant (1a-1i) et ayant un émetteur électronique et un récepteur électronique, le contrôleur de composants étant en communication opérationnelle avec l'unité système (2) via l'émetteur électronique et via le récepteur électronique, et

le bâtiment commercial, résidentiel et/ou industriel (4) comprenant trois émetteurs-récepteurs à bande ultra large (3a - 3d) ou plus ayant des emplacements physiques connus, chaque émetteur-récepteur à bande ultra large (3a-3d) étant configuré pour émettre une impulsion radiofréquence à bande ultra large.

EP 3 869 283 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3156858 B1
- EP 3156858 A1
- US 6054950 A
- US 09013667 B
- WO 2007008680 A2
- US 2009066473 A1, SIMONS PAUL R
- US 2006074494 A1, MCFARLAND NORMAN R
- WO 2017062846 A1